# FASCICULE DE BREVET EUROPEEN

(11) **EP 4 070 976 B1**
(45) Date de publication et mention de la délivrance du brevet: **04.09.2024**
(21) Numéro de dépôt: 22167556.4
(22) Date de dépôt: 11.04.2022
(51) Int. Cl.: B60J 10/24, B60J 10/25, B60J 10/86

(54) **DISPOSITIF D ÉTANCHÉITÉ DE CAISSE DE VÉHICULE NOTAMMENT AUTOMOBILE SANS MONTANT CENTRAL**
DICHTUNGSVORRICHTUNG FÜR FAHRZEUGKAROSSERIE, INSBESONDERE FÜR KRAFTFAHRZEUG OHNE B-SÄULE
DEVICE FOR SEALING A VEHICLE BODY, PARTICULARLY A MOTOR VEHICLE WITH NO CENTRAL UPRIGHT

(30) Priorité: 09.04.2021 FR 2103670
(43) Date de publication de la demande: 12.10.2022
(73) Titulaire: Renault s.a.s, 92100 Boulogne Billancourt (FR)
(72) Inventeur: LEROYER, BRUNO, 78910 ORGERUS (FR)

(56) Documents cités:
- JP-A- 2006 248 422
- JP-U- S58 188 319
- US-A1- 2016 250 912

## Description

La présente invention se rapporte au domaine des véhicules, notamment automobiles, sans montant central. Plus précisément, l'invention concerne une étanchéité au niveau d'ouvrants d'un véhicule, notamment automobile, dépourvue d'au moins un montant central.

Un véhicule automobile comporte une caisse, ou superstructure, qui définit la structure du véhicule et qui participe notamment à délimiter l'habitacle du véhicule. Cette caisse comporte latéralement deux côtés de caisse, avec des ouvertures pour le passage des utilisateurs du véhicule qui s'étendent entre différents montants verticaux reliant le bas de caisse au pavillon de toit. Il est ainsi connu d'avoir des ouvertures agencées entre des montants avants, qui servent à la fois de châssis au parebrise avant et de support aux portes avants du véhicule et des montants arrières qui permettent notamment de maintenir la lunette arrière, avec pour chaque côté de caisse un montant central, ou pied milieu, qui s'étend entre le bas de caisse et un brancard du pavillon et qui délimite deux ouvertures recouvertes chacune par une porte, la porte arrière étant montée pivotante sur une charnière fixée sur le pied milieu.

Certains véhicules sont dépourvus d'au moins un montant central pour améliorer l'accessibilité de l'habitacle. Le côté latéral de caisse comporte alors une unique ouverture délimitant un passage pour les utilisateurs du véhicule, cette unique ouverture s'étendant depuis un montant avant jusqu'à un montant arrière. Dans ces véhicules sans montant central, il est connu d'avoir la porte avant configurée comme une porte battante montée à rotation autour de charnières fixées sur un montant avant du côté de caisse et la porte arrière qui peut être configurée comme une porte coulissante montée sur un rail le long du côté de caisse ou bien être configurée comme une porte battante montée à rotation autour de charnières fixées sur un montant arrière du côté de caisse.

Quelle que soit la configuration du côté de caisse, des moyens d'étanchéité sont prévus entre les portes et la structure de la caisse, notamment pour empêcher l'eau de pluie ou de lavage de pénétrer dans l'habitacle lorsque les portes sont fermées.

Généralement, les moyens d'étanchéité associés à un côté de caisse comprennent un joint d'étanchéité principal s'étendant en périphérie de l'ouverture de la caisse et un joint d'étanchéité secondaire qui s'étend sensiblement linéairement le long du brancard de pavillon de toit.

De manière classique, le joint d'étanchéité principal est spécifique à chaque ouverture de part et d'autre du pied milieu, et une portion de ce joint d'étanchéité principal est donc destiné à s'étendre le long du pied milieu. On distingue ainsi le joint d'étanchéité principal qui s'étend sur tout le pourtour de l'ouverture et qui est propre à chaque ouverture, et le joint d'étanchéité secondaire qui est associé au brancard de pavillon et qui s'étend de façon continue le long du coté de caisse, sans discontinuité, pour coopérer avec les montants supérieurs des portes avant et arrière.

Dans le contexte d'un véhicule sans pied milieu, le joint d'étanchéité principal s'étend en périphérie de l'ouverture unique et il n'a pas d'interaction avec les portes au niveau de la zone de jonction des portes habituellement définie par la présence du pied milieu. Un joint d'étanchéité vertical est alors prévu pour être agencé entre les deux portes lorsque celles-ci sont fermées pour éviter des infiltrations entre les portes, et il est notamment connu de disposer ce joint d'étanchéité verticale sur la porte arrière, notamment dans le contexte où la porte arrière est une porte coulissante et la porte avant une porte battante. En position de fermeture de l'ouverture de caisse par les portes avant et arrière, l'ajout de ce joint d'étanchéité vertical a pour fonction d'éviter un écoulement d'eau le long du côté intérieur des portes du véhicule au niveau de la jonction des portes avant et arrière avec le brancard supérieur de caisse.

Le joint d'étanchéité vertical est porté par le bord intérieur avant de la porte arrière, c'est-à-dire le bord disposé en regard de la porte avant lorsque les deux portes sont fermées en même temps. Ce joint d'étanchéité vertical, qui assure l'étanchéité de la porte arrière avec la porte avant est qualifié de joint inter-portes. Le joint inter-portes possède une architecture particulière en ce sens qu'il doit rendre possible les déplacements d'ouverture et de fermeture de chacune des portes, quel que soit l'état d'ouverture ou de fermeture de l'un ou l'autre des portes. Le joint inter-portes doit notamment être configuré pour que, lors de lavages ou de fortes pluies, de l'eau parvenu à s'écouler sous le joint d'étanchéité secondaire ne puisse pénétrer dans l'habitacle entre les portes, et il convient à cet effet de considérer particulièrement la coopération entre le joint inter-portes et le joint d'étanchéité principal. Les documents JP2006-248422 A et US 2016/0250912 A1 décrivent ces joints inter-portes.

La présente invention s'inscrit dans ce contexte et vise à proposer un ouvrant et un côté de caisse du véhicule aptes à offrir des performances d'étanchéité optimales dans un contexte de véhicule sans pied milieu.

La présente invention propose un ouvrant de véhicule comprenant une paroi destinée à venir en contact d'un côté de caisse du véhicule, la paroi s'étendant dans un plan général d'extension vertical et longitudinal. La paroi comporte une face intérieure et une face extérieure reliée à la face intérieure par une face d'extrémité. L'ouvrant comprend, sur une partie supérieure de la face intérieure, une première zone de réception d'un joint d'étanchéité primaire qui est agencé au moins en partie sur le pourtour d'une ouverture du côté de caisse destinée à être fermée par l'ouvrant et une deuxième zone de réception d'un joint d'étanchéité secondaire qui est agencé au moins en partie sur un brancard de pavillon du côté de caisse, la première zone de réception et la deuxième zone de réception s'étendant sensiblement dans une direction longitudinale et à distance l'une de l'autre. L'ouvrant comprend un joint d'étanchéité inter-portes qui s'étend principalement le long d'une direction verticale, le joint d'étanchéité inter-portes étant agencé au moins en partie sur une zone de jonction entre la face intérieure de la paroi et la face d'extrémité de la paroi. Le joint d'étanchéité inter-portes comprend une portion tubulaire délimitant en son sein un conduit interne d'évacuation de fluide, notamment d'eau. Une extrémité supérieure du joint d'étanchéité inter-portes est agencée entre la première zone de réception et la deuxième zone de réception, l'extrémité supérieure délimitant un orifice débouchant sur le conduit interne.

Il faut entendre ici, ainsi que dans tout ce qui suit, par « sensiblement », que les tolérances de fabrication, ainsi que d'éventuelles tolérances d'assemblage, doivent être prises en compte.

L'ouvrant de l'invention peut être employé pour autoriser ou interdire un accès à une ouverture latérale d'un véhicule. L'ouverture latérale donne sur un habitacle du véhicule qui peut être dépourvu d'un montant central. Lorsque l'ouvrant prend une position fermée pour interdire au moins en partie l'accès à l'ouverture latérale, la face intérieure de l'ouvrant est alors en regard de l'habitacle et la face extérieure est disposée sensiblement dans le plan de la carrosserie. La première zone de réception et la deuxième zone de réception sont au contact d'un joint d'étanchéité primaire et d'un joint d'étanchéité secondaire respectivement.

Des moyens d'étanchéité sont prévus sur ce véhicule entre l'ouvrant de l'invention et la caisse du véhicule et ils comprennent notamment le joint d'étanchéité primaire et le joint d'étanchéité secondaire précédemment évoqué, et l'ouvrant comprend des zones, dites zones de réception, destinées à être en contact avec ces joints d'étanchéité. Le joint d'étanchéité primaire et le joint d'étanchéité secondaire sont à distance non nulle l'un de l'autre et par conséquent, la première zone de réception et la deuxième zone de réception ne se chevauchent pas et ne se touchent pas.

Le premier joint d'étanchéité est disposé en périphérie de l'ouverture latérale destinée à être recouverte par l'ouvrant de l'invention et le deuxième joint d'étanchéité est disposé le long d'un brancard de pavillon, de sorte que dans la partie supérieure du côté de caisse du véhicule, les deux joints d'étanchéité s'étendent longitudinalement. Les zones de réception destinées à être en contact avec ces joints d'étanchéité s'étendent donc selon une direction longitudinale le long de la face intérieure de l'ouvrant destinée à être en regard du côté de caisse et au contact des joints d'étanchéité.

Le joint d'étanchéité inter-portes, qui s'étend essentiellement verticalement, est sensiblement perpendiculaire aux zones de réception sensiblement longitudinales destinées à entrer en contact des joints d'étanchéité disposés sur le côté de caisse du véhicule. Et dans ce contexte, selon l'invention, l'extrémité supérieure du joint d'étanchéité inter-portes est disposée sur l'ouvrant entre la première zone de réception et la deuxième zone de réception de sorte qu'une fois l'ouvrant en position fermée sur la caisse du véhicule, cette extrémité supérieure du joint d'étanchéité se retrouve entre le joint d'étanchéité primaire et le joint d'étanchéité secondaire.

Lorsque le véhicule reçoit une grande quantité d'eau, au moins une partie du fluide accumulé entre le joint d'étanchéité primaire et la joint d'étanchéité secondaire peut être évacué par le conduit interne du joint d'étanchéité inter-portes en passant par l'ouverture à l'extrémité supérieure du joint d'étanchéité. Selon une caractéristique de l'invention, le joint d'étanchéité inter-portes, et notamment le conduit interne formant conduit d'évacuation de fluide, s'étend verticalement sur toute la dimension de l'ouvrant, de manière à pouvoir évacuer le fluide circulant en son sein vers le sol lorsque l'ouvrant est dans une configuration ouverte ou dans un réceptacle approprié ménagé dans le bas de caisse lorsque l'ouvrant est dans une configuration fermée.

Selon l'invention, l'extrémité supérieure du joint d'étanchéité inter-portes présente une forme d'écope. De la sorte, le joint d'étanchéité inter-portes comporte une portion de récupération de fluide, qui est agencée entre les joints d'étanchéité entre caisse et ouvrant et qui est formée ici par l'écope, et une portion d'évacuation de fluide formée par le conduit interne, ces deux portions communiquant fluidiquement pour que le fluide récupéré entre les joints d'étanchéité puisse être évacué par le joint d'étanchéité inter-portes via la portion d'évacuation. Plus précisément, une paroi de fond de l'écope délimite l'orifice débouchant dans le conduit interne d'évacuation de fluide. La forme d'écope est telle que la portion de récupération présente longitudinalement une dimension plus importante que la dimension correspondante de la portion d'évacuation. La collecte de fluide est ainsi améliorée et on évite ainsi que du fluide vienne stagner au croisement du joint d'étanchéité primaire et du joint d'étanchéité inter-portes.

Selon un mode de réalisation, le joint d'étanchéité inter-portes s'étend en travers de la direction longitudinale de la première zone de réception. Autrement dit, le joint d'étanchéité inter-portes coupe la première zone de réception. L'étanchéité est ainsi améliorée entre l'ouvrant et le brancard de pavillon.

Selon un mode de réalisation, l'extrémité supérieure, notamment l'écope, du joint d'étanchéité inter-portes ne coupe pas la deuxième zone de réception. Tel qu'évoqué précédemment, l'extrémité supérieure du joint d'étanchéité inter-portes forme une portion de récupération de fluide pour le fluide qui peut être présent entre la caisse et l'ouvrant dans une zone entre les deux joints d'étanchéité primaires et secondaires.

Selon un mode de réalisation, l'écope présente une section de passage de fluide diminuant dans une direction orientée de la deuxième zone de réception à la première zone de réception. La section de passage de fluide est vue en projection sur un plan perpendiculaire à la direction orientée de la deuxième zone de réception à la première zone de réception, et plus particulièrement sur un plan perpendiculaire à la direction verticale selon laquelle s'étant principalement le joint d'étanchéité inter-portes. L'évolution de la section de passage peut notamment être évolutive, c'est à dire décroitre progressivement au fur et à mesure qu'elle se rapproche du conduit interne d'évacuation de fluide. Autrement dit, l'écope présente une forme d'entonnoir permettant d'optimiser la quantité de fluide capté entre les joints d'étanchéité pour l'évacuer par ailleurs. Ainsi, la collecte et l'évacuation du fluide sont améliorées.

Selon un mode de réalisation, le joint d'étanchéité inter-portes comprend au moins un organe de fixation à la face intérieure de la paroi de l'ouvrant, l'organe de fixation étant agencé entre la première zone de réception et la deuxième zone de réception.

La présence de cet organe de fixation permet d'assurer d'une part que l'écope est bien maintenue entre la première zone de réception et la deuxième zone de réception et d'autre part que cette écope est bien plaquée contre la face intérieure de la paroi de l'ouvrant, pour éviter que de l'eau puisse couler entre l'écope et cette face intérieure. De manière plus générale, l'au moins un organe de fixation a pour effet de maintenir en position l'écope pour qu'elle assure sa fonction de récupération de fluide alors que le joint d'étanchéité inter-portes à l'extrémité duquel est formée cette écope est contraint par le contact de l'ouvrant sur le côté de caisse et le cas échéant par le contact avec un autre ouvrant. Il convient de noter que cet organe de fixation a également pour effet de s'assurer que l'écope soit correctement plaquée contre un ouvrant additionnel lorsque les deux ouvrants prennent une configuration fermée et que le joint d'étanchéité inter-portes doit éviter l'écoulement de fluide entre les deux ouvrants.

Selon l'invention, le joint d'étanchéité inter-portes comprend un élément de retenue à la zone de jonction entre la face intérieure de la paroi et la face d'extrémité de la paroi. Ainsi, le joint d'étanchéité inter-portes est fixé au moins en partie le long d'un bord de la face intérieure de la paroi de l'ouvrant.

Selon l'invention, le joint d'étanchéité inter-portes comprend une première portion qui s'étend selon la direction verticale et porte l'élément de retenue, la première portion formant une butée configurée pour être en contact avec un ouvrant additionnel, et une deuxième portion qui s'étend selon la direction verticale et porte la portion tubulaire du joint d'étanchéité inter-portes, la deuxième portion s'étendant au moins en partie en regard de la face d'extrémité.

La première portion du joint d'étanchéité inter-portes s'étend ainsi au moins en partie, préférentiellement entièrement, le long de la zone de jonction qui est en regard de l'habitacle du véhicule. En outre cette première portion du joint d'étanchéité inter-portes est destinée à être au contact d'un autre ouvrant apte à prendre une position de fermeture de l'ouverture latérale de manière complémentaire à l'ouvrant selon l'invention, la première portion du joint d'étanchéité inter-portes étant en contact de l'ouvrant additionnel lorsque les deux ouvrants sont montés sur le véhicule et dans une position fermée. Par ailleurs, la deuxième portion du joint d'étanchéité inter-portes s'étend selon une direction qui est parallèle à la direction d'extension de la première portion du joint d'étanchéité inter-portes, étant entendu que les deux portions du joint d'étanchéité inter-portes s'étendent toutes deux le long de la direction d'allongement principale du joint d'étanchéité inter-portes, à savoir la direction verticale. Il est notable dans cet agencement que la deuxième portion qui intègre la portion tubulaire d'évacuation de fluide est disposée en regard de la face d'extrémité et que la première portion du joint d'étanchéité inter-portes s'étend entre cette deuxième portion et l'habitacle. De la sorte, en cas de fuite du conduit d'évacuation formé au sein de la deuxième portion, on évite que du fluide pénètre dans l'habitacle, avec le fluide de fuite qui s'écoule alors le long de la face d'extrémité, et la première portion qui empêche ce fluide de pénétrer dans l'habitacle.

Selon un mode de réalisation, la deuxième portion du joint d'étanchéité inter-portes, portant le conduit d'évacuation de fluide, est décalée longitudinalement par rapport à la première portion du joint d'étanchéité inter-portes, en prenant une position de retrait vers la face d'extrémité. En d'autres termes, la deuxième portion du joint d'étanchéité inter-portes peut être disposé dans un renfoncement formant feuillure au niveau de la face d'extrémité, et être ainsi protégée d'un choc avec un ouvrant additionnel au moment de la fermeture des ouvrants sur l'ouverture du côté de caisse du véhicule. On évite ainsi la déformation du conduit interne d'évacuation de fluide et le risque de mauvaise évacuation de fluide par compression du conduit interne ou encore le risque de fuite de fluide par perforation du joint au niveau de la deuxième portion.

Selon un mode de réalisation, la deuxième portion du joint d'étanchéité inter-portes s'étend le long d'une zone de jonction entre la face extérieure de la paroi de l'ouvrant et la face d'extrémité de la paroi de l'ouvrant. Dans cette position, le joint d'étanchéité inter-portes participe à assurer l'étanchéité par rapport à l'extérieur du véhicule en évitant que de l'eau et/ou des salissures ne puissent pénétrer dans l'habitacle entre les deux ouvrants.

Selon un mode de réalisation, le joint d'étanchéité inter-portes comprend une portion de raccordement de la première portion du joint d'étanchéité inter-portes à la deuxième portion du joint d'étanchéité inter-portes. Une telle portion de raccordement permet de s'assurer de la tenue des deux portions du joint d'étanchéité inter-portes l'une par rapport à l'autre.

Selon un mode de réalisation, la première portion, la deuxième portion et la portion de raccordement forment un ensemble monobloc avec l'écope.

Il faut entendre ici, ainsi que dans tout ce qui suit, par « monobloc » le fait que la première portion, la deuxième portion, la portion de raccordement et l'écope forment un unique ensemble ne pouvant être séparé sans entraîner la détérioration d'au moins l'un des éléments qui le compose. En d'autres termes, la première portion ou la deuxième portion du joint d'étanchéité inter-portes ne peuvent être dissociées de la portion de raccordement et/ou de l'écope sans que l'ensemble soit détérioré et rendu inutilisable.

Selon un mode de réalisation, la première portion et la deuxième portion sont venues de matière avec la portion de raccordement. En d'autres termes, les première et deuxième portions du joint d'étanchéité inter-portes qui s'étendent sensiblement parallèlement l'une par rapport l'autre et la portion de raccordement qui les relie sont réalisées en une seule pièce dans le même matériau.

Selon un mode de réalisation, le joint d'étanchéité inter-portes comprend un dispositif de fixation de la portion de raccordement à la face d'extrémité. La présence d'un tel dispositif de fixation permet d'assurer que les deux portions du joint d'étanchéité inter-portes restent plaquées contre l'ouvrant sur toute la dimension verticale du joint d'étanchéité inter-portes. Le cas échéant, le joint d'étanchéité inter-portes peut comporter plusieurs dispositifs de fixation permettant de fixer la portion de raccordement à plusieurs hauteurs distinctes de la face d'extrémité.

L'invention concerne par ailleurs un véhicule comprenant une caisse délimitant un habitacle, dans lequel la caisse comprend au moins un montant avant et au moins un montant arrière, une extrémité supérieure du montant avant étant reliée à une extrémité supérieure du montant arrière par un brancard de pavillon, le montant avant, le montant arrière et le brancard de pavillon participant à délimiter avec un bas de caisse du véhicule une ouverture unique sur un côté latéral de la caisse.

Un joint d'étanchéité primaire est agencé au moins en partie sur le pourtour de l'ouverture unique du côté de caisse destinée à être fermée par l'ouvrant et un joint d'étanchéité secondaire est agencé au moins en partie sur un brancard de pavillon du côté de caisse.

Le véhicule comprend au moins un ouvrant conforme à ce qui vient d'être décrit précédemment et configuré pour être mobile entre une position fermée et une position ouverte de sorte à autoriser ou interdire l'accès à au moins une partie de l'ouverture unique, dans lequel l'ouvrant est configuré pour que, dans une position fermée, la première zone de réception de l'ouvrant soit en contact avec le joint d'étanchéité primaire, la deuxième zone de réception de l'ouvrant soit en contact avec le joint d'étanchéité secondaire et l'extrémité supérieure du premier joint d'étanchéité inter-portes soit disposée entre le joint d'étanchéité primaire et le joint d'étanchéité secondaire.

Selon un mode de réalisation, l'ouvrant est une porte arrière, le véhicule comprenant en outre un ouvrant additionnel formant porte avant configuré pour être mobile entre une position fermée et une position ouverte de sorte à autoriser ou interdire l'accès à au moins une autre partie de l'ouverture unique.

Plus particulièrement, la porte arrière peut être une porte coulissante, apte à glisser le long d'un rail formé sur le côté latéral de caisse, et la porte avant peut être un porte battante articulée sur des charnières fixées sur le montant avant associé à ce côté latéral de caisse.

Selon un mode de réalisation, la porte avant est configurée pour, dans la position fermée, être en contact avec au moins une partie de la première portion du joint d'étanchéité inter-portes et/ou être en contact avec au moins une partie de la deuxième portion du joint d'étanchéité inter-portes.

Selon un mode de réalisation, le joint d'étanchéité inter-portes associé à un ouvrant, par exemple la porte arrière coulissante, est configuré pour que l'écope formée à son extrémité supérieure soit au contact de l'ouvrant additionnel, par exemple la porte avant battante.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig 1] La figure 1 est une représentation schématique d'un véhicule automobile selon l'invention ;
[fig 2] La figure 2 est une vue de détails d'une zone A du véhicule de la figure 1, vue e perspective depuis l'intérieur du véhicule.
[fig 3] La figure 3 est une vue en coupe selon un plan X, vertical et transversal, de la zone A du véhicule de la figure 1.
[fig 4] La figure 4 est une vue de la zone A du véhicule semblable à celle de la figure 2, ici dans une vue de côté dans un plan longitudinal et vertical, depuis l'intérieur du véhicule ;
[fig 5] La figure 5 est une vue en coupe selon un plan Z1 de la figure 4 rendant notamment visible l'extrémité supérieure d'un joint inter-portes ;
[fig 6] La figure 6 est une vue en coupe selon un plan Z2 de la figure 4 rendant notamment visible la réalisation du joint d'étanchéité inter-portes en deux portions verticales, reliées par une portion de raccordement ;
[fig 7] La figure 7 est une vue en coupe selon un plan Z3 de la figure 4 rendant notamment visible les deux portions verticales du joint d'étanchéité inter-portes.

Il faut tout d'abord noter que si les figures exposent l'invention de manière détaillée pour sa mise en oeuvre, elles peuvent bien entendu servir à mieux définir l'invention le cas échéant. Il est également à noter que, sur l'ensemble des figures, les éléments similaires et/ou remplissant la même fonction sont indiqués par la même numérotation.

La direction selon laquelle un véhicule, notamment un véhicule automobile, se déplace en ligne droite est définie comme étant une direction longitudinale L. Par convention, une direction perpendiculaire à la direction longitudinale, située dans un plan parallèle au sol, est nommée direction transversale T. Une troisième direction, perpendiculaire aux deux autres, est nommée direction verticale V. Le sens avant correspond au sens dans lequel le véhicule se déplace habituellement dans la direction longitudinale L et est opposé au sens arrière.

L'invention porte sur un ouvrant de véhicule particulier en ce qu'il comprend un joint d'étanchéité inter-portes comportant une portion tubulaire délimitant en son sein un conduit interne d'évacuation de fluide et en ce qu'une extrémité supérieure du joint d'étanchéité inter-portes est agencée entre une première zone de réception d'un joint d'étanchéité primaire du véhicule et une deuxième zone de réception d'un joint d'étanchéité secondaire du véhicule, l'extrémité supérieure délimitant un orifice débouchant sur le conduit interne.

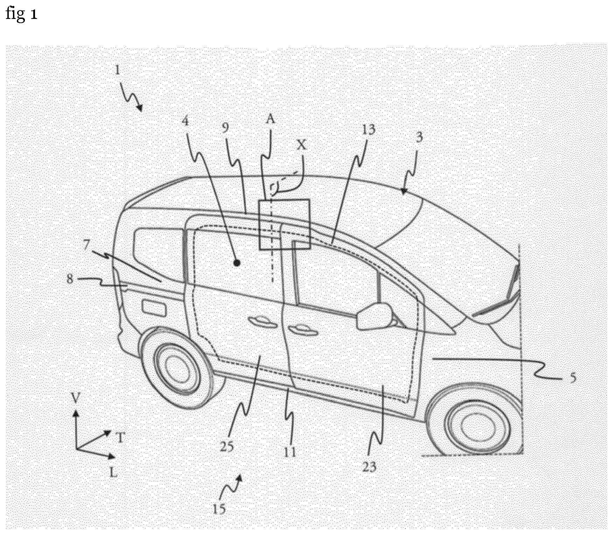

L'ouvrant selon l'invention est mis en oeuvre sur un véhicule tel qu'illustré sur la figure 1, au niveau d'un côté de caisse dépourvu de montant central, ou pied milieu.

En référence à la figure 1, le véhicule comprenant une caisse 3 qui délimite un habitacle 4 du véhicule 1. Un côté latéral 15 de la caisse 3, aussi appelé côté de caisse 15, comprend une ouverture 13 unique donnant accès à l'habitable 4 aussi bien pour des passagers avants que pour des passagers arrière du véhicule.

L'ouverture 13 unique est délimitée par au moins un montant avant 5 et au moins un montant arrière 7, un brancard de pavillon 9 reliant une extrémité supérieure du montant avant 5 à une extrémité supérieure du montant arrière 7, et un bas de caisse 11 reliant une extrémité inférieure du montant avant 5 à une extrémité inférieure du montant arrière 7. Tel que cela a pu être évoqué précédemment, le côté latéral de caisse 13 ne comprend pas de montant central agencé entre le montant avant 5 et le montant arrière 7.

Le véhicule 1 comprend un joint d'étanchéité primaire 17 et un joint d'étanchéité secondaire 19 qui sont disposés sur le côté de caisse 15, entre la caisse 3 et des premier et deuxième ouvrants 23, 25 pour éviter des voies d'eau dans l'habitacle 4 au niveau de l'ouverture 13 unique.

Plus particulièrement, le joint d'étanchéité primaire 17 est agencé sur le pourtour de l'ouverture 13 unique du côté de caisse 3. Le joint d'étanchéité primaire 17 s'étend ainsi sur le montant avant 5, le brancard de pavillon 9, le montant arrière 7 et le bas de caisse 11. Le joint d'étanchéité primaire 17 fait le tour de l'ouverture 13 unique. En plus de l'étanchéité à l'eau, il assure une étanchéité à l'air et/ou à la poussière.

Le joint d'étanchéité secondaire 19 est agencé au moins en partie sur le brancard de pavillon 9 du côté de caisse 15 selon une direction longitudinale L tel que définie auparavant. Le joint d'étanchéité secondaire 19 est à distance du joint d'étanchéité primaire 17. Le joint d'étanchéité secondaire 19 ne touche donc pas le joint d'étanchéité primaire 17. Au niveau du brancard de pavillon, le joint d'étanchéité primaire 17 s'étend sensiblement longitudinalement, c'est-à-dire sensiblement parallèlement au joint d'étanchéité secondaire.

Il résulte de cet agencement des joints d'étanchéité agencés entre le côté de caisse et les ouvrants que le joint d'étanchéité primaire 17 est plus proche de l'ouverture 13 unique que le joint d'étanchéité secondaire 19. Le joint d'étanchéité secondaire 19 assure alors un rôle de première barrière d'étanchéité contre l'eau et/ou les poussières pour l'habitacle 4. Le joint d'étanchéité secondaire 19 peut aussi assurer un rôle d'atténuation acoustique.

Tel que cela a pu être évoqué précédemment, le véhicule 1 comprend deux ouvrants 23, 25 aptes à recouvrir l'ouverture unique 13 lorsqu'ils prennent chacun une position fermée. Plus particulièrement, le véhicule comprend au moins un premier ouvrant 23 configuré pour être mobile entre une position fermée et une position ouverte de sorte à autoriser ou interdire l'accès à au moins une partie de l'ouverture 13 unique. Le premier ouvrant 23 est par exemple une porte avant, plus particulièrement une porte avant battante ou pivotante. Le premier ouvrant 23 est à cet effet articulé sur des charnières fixées sur le montant avant 5.

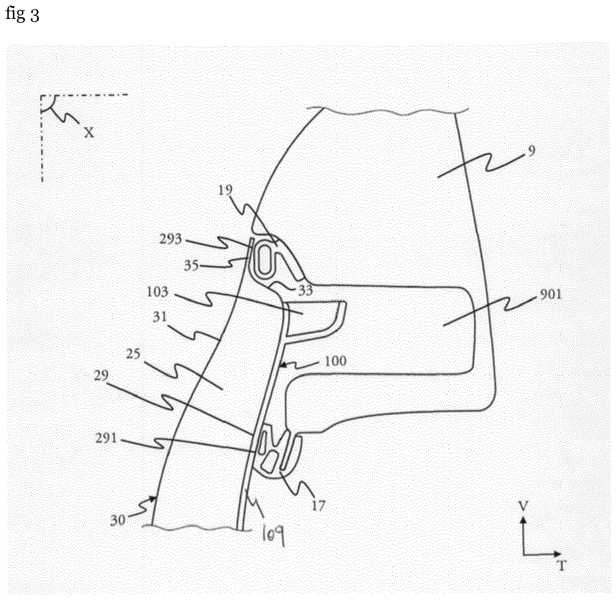

Le véhicule 1 comprend au moins un deuxième ouvrant 25 configuré pour être mobile entre une position fermée et une position ouverte de sorte à autoriser ou interdire l'accès à au moins une partie de l'ouverture 13 unique. Le deuxième ouvrant 25 est par exemple une porte arrière, plus particulièrement une porte arrière coulissante. A cet effet, le deuxième ouvrant 25 est configuré pour coulisser le long d'un rail 8 agencé sur le montant arrière 7. Le mouvement de déplacement en transversal du deuxième ouvrant 25 est effectué via un moyen d'articulation constitué d'un rail s'étendant à l'intérieur du brancard 9, notamment au travers d'un dégagement 901. Selon une variante de réalisation, le mouvement du deuxième ouvrant 25 peut être effectué via des moyens motorisés qui peuvent être disposés dans le dégagement 901, visible sur la figure 3, du brancard de pavillon 9.

L'ouvrant selon l'invention tel qu'il a été évoqué précédemment, c'est-à-dire porteur d'un joint inter-portes spécifique, est ici le deuxième ouvrant, à savoir la porte arrière.

Le deuxième ouvrant 25 comprend une paroi 27 destinée à venir en contact d'un côté de caisse du véhicule 1. La paroi 27 s'étend principalement dans un plan général d'extension vertical et longitudinal. La paroi 27 comporte une face intérieure 29 et une face extérieure 31 reliée transversalement à la face intérieure 29 par au moins une face d'extrémité 33 formant une face d'extrémité avant tournée vers l'autre ouvrant.

Plus particulièrement, lorsque le premier ouvrant 23 et le deuxième ouvrant 25 sont en position fermée pour venir fermer l'accès à l'ouverture unique du côté de caisse, l'un à la suite d'un pivotement et l'autre à la suite d'un coulissement, une face d'extrémité arrière 24 du premier ouvrant 23 est directement en regard de la face d'extrémité 33 du deuxième ouvrant 25 du fait de l'absence de montant central.

Côté habitacle du véhicule, lorsque le deuxième ouvrant est en position fermée, la face intérieure 29 de la paroi 27 et la face d'extrémité 33 de la paroi 27 se rejoignent et forment une première zone de jonction 35. La première zone de jonction 35 forme une saillie de la face d'extrémité 33, à un bord transversal de cette dernière, dans le prolongement de la face intérieure 29.

A l'opposé, tournée vers l'extérieur du véhicule, la face extérieure 31 de la paroi 27 et la face d'extrémité 33 de la paroi 27 se rejoignent et forment une deuxième zone de jonction 37. La deuxième zone de jonction 37 forme une autre saillie de la face d'extrémité, à un bord transversal opposé de cette face d'extrémité 33, dans le prolongement de la face extérieure 33.

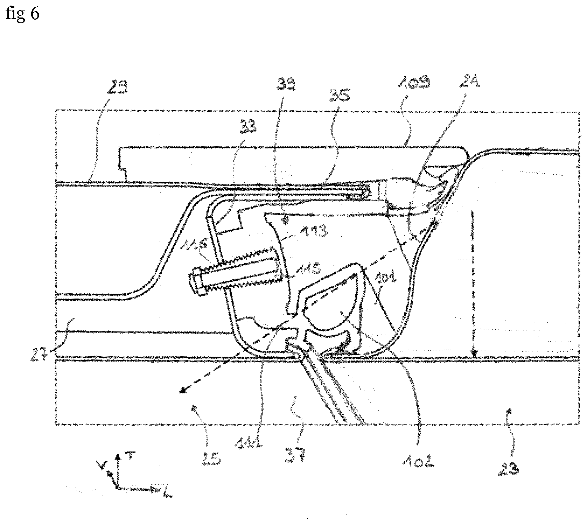

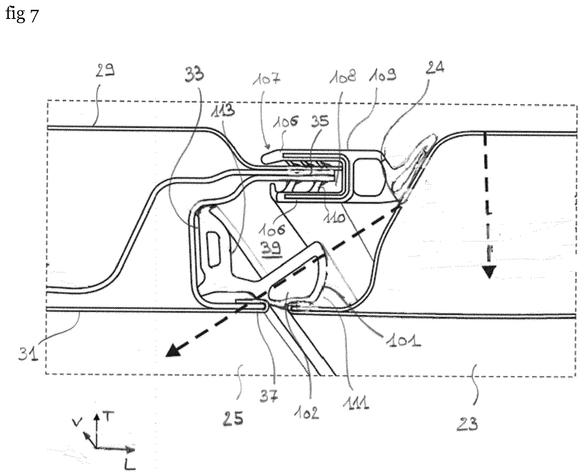

La première zone de jonction 35, la face d'extrémité 33 et la deuxième zone de jonction 37 participent à délimiter un renfoncement 39 notamment dans l'épaisseur du deuxième ouvrant 25, le renfoncement, visible sur les figures 6 et 7, s'étendant le long de la direction verticale. Lorsque le premier ouvrant 23 et le deuxième ouvrant sont en position fermée, le renfoncement 39 est en regard de la face d'extrémité arrière 24 du premier ouvrant 23.

Le deuxième ouvrant 25 comprend une première zone de réception 291 qui est destinée à être au contact du joint d'étanchéité primaire 17 du véhicule 1 et une deuxième zone de réception 293 qui est destinée à être en contact du joint d'étanchéité secondaire 19 du véhicule 1. La première zone de réception 291 et la deuxième zone de réception 293 sont disposées sur une partie supérieure 30 de la face intérieure 29 de la paroi 27.

Lorsque le deuxième ouvrant 25 prend une position fermée pour interdire au moins en partie l'accès à l'ouverture latérale, la face intérieure 29 du deuxième ouvrant 25 est alors en regard de l'habitacle 4. La face extérieure 31 est disposée sensiblement dans le plan de la carrosserie. La partie supérieure 30 dans laquelle sont inscrites les zones de réception est, dans cette position fermée du deuxième ouvrant, en regard du brancard de pavillon, de sorte que la première zone de réception 291 et la deuxième zone de réception 293 sont au contact du joint d'étanchéité primaire 17 et du joint d'étanchéité secondaire 19 respectivement.

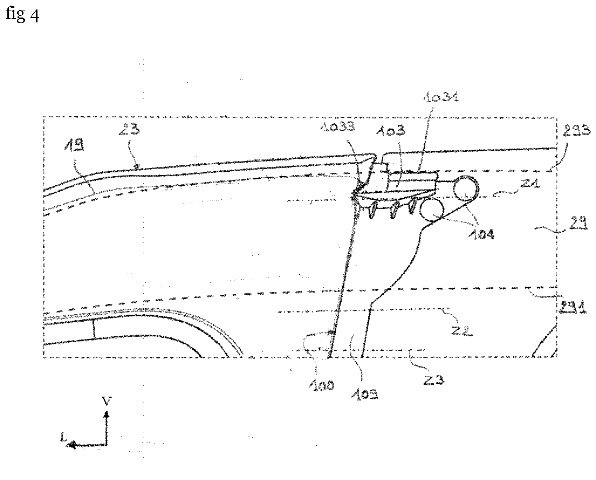

Tel que cela est notamment visible sur les figures 3 et 4, la première zone de réception 291 et la deuxième zone de réception 293 s'étendent sensiblement dans la direction longitudinale L et à distance l'une de l'autre, devant être au contact des joints d'étanchéité primaire 17 et secondaire 19 dans la zone du brancard de pavillon. La première zone de réception 291 et la deuxième zone de réception 293 s'étendent sensiblement parallèlement l'une par rapport à l'autre et ne se touchent pas.

Tel que cela a été évoqué précédemment, selon l'invention, l'ouvrant selon l'invention comprend un joint d'étanchéité inter-portes. Plus particulièrement, ici, c'est le deuxième ouvrant 25, à savoir la porte arrière coulissante, qui porte ce joint d'étanchéité inter-portes 100. Ce joint a notamment pour fonction d'assurer une étanchéité entre les deux ouvrants destinés à fermer l'ouverture unique du côté de caisse du véhicule sans montant central.

Le joint d'étanchéité inter-portes 100 s'étend principalement le long d'une direction verticale V telle que définie auparavant, c'est-à-dire sensiblement perpendiculairement à la direction d'allongement des zones de réception portées par ce même ouvrant. Le joint d'étanchéité inter-portes est fixé sur l'ouvrant de telle sorte qu'au moins une partie de ce joint d'étanchéité inter-portes repose contre la face intérieure 29 de la paroi 27. Tel qu'illustré sur les figures, le joint d'étanchéité inter-portes comporte au moins une portion de fixation sur la première zone de jonction 35 de la paroi 27.

Une extrémité supérieure 103 du joint d'étanchéité inter-portes 100 est agencée entre la première zone de réception 291 et la deuxième zone de réception 293. En d'autres termes, le joint d'étanchéité inter-portes, qui s'étend sensiblement perpendiculairement aux zones de réception, s'étend le long de la face intérieure de manière à croiser la première zone de réception. Par conséquent, lorsque le deuxième ouvrant 25 repose contre le côté latéral de caisse 15, l'extrémité supérieure 103 du joint d'étanchéité inter-portes 100 est localisée entre le joint d'étanchéité primaire 17 et le joint d'étanchéité secondaire 19 et le joint d'étanchéité inter-portes 100 est en contact avec le joint d'étanchéité primaire 17 entourant l'ouverture 13 unique de la caisse 3 sans toucher le joint d'étanchéité secondaire 19.

Le joint d'étanchéité inter-portes 100 comprend une portion tubulaire 101 qui définit en son sein un conduit interne 102 d'évacuation de fluide. Le fluide est par exemple de l'eau ou un liquide comprenant majoritairement de l'eau comme de l'eau de pluie. Le conduit interne 102 comprend à une extrémité libre un orifice 105 délimité par l'extrémité supérieure 103 du joint d'étanchéité inter-portes 100. Dans ce contexte, une entrée du conduit interne 102 se retrouve entre le joint d'étanchéité primaire 17 et le joint d'étanchéité secondaire 19 quand le deuxième ouvrant 25 en position fermée sur la caisse 3 du véhicule 1.

Il résulte de cet agencement du joint d'étanchéité inter-portes qu'il peut être défini une portion de récupération de fluide disposée entre les joints d'étanchéité primaire 17 et secondaire 19 lorsque l'ouvrant est dans une position fermée contre le côté de caisse, et une portion d'évacuation de fluide formée par la portion tubulaire, avec la portion de récupération qui communique avec la portion d'évacuation, le fluide récupéré au niveau de la portion de récupération étant apte à s'écouler via le conduit d'évacuation en direction d'une partie basse de la structure du véhicule.

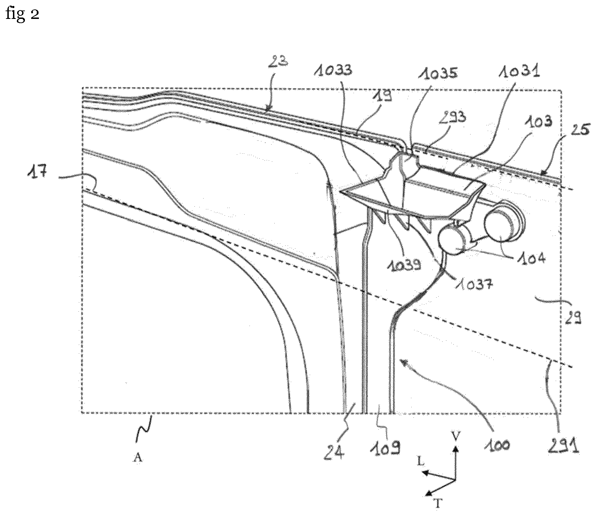

L'extrémité supérieure 103 du joint d'étanchéité inter-portes 100 peut prendre une forme particulière de sorte à améliorer une récupération de fluide susceptible d'être présent entre les joints d'étanchéité primaire 17 et secondaire 19, et par exemple dans le dégagement 901, lorsque le deuxième ouvrant 25 est en position fermée et que les zones de réception sont en contact des joints d'étanchéité primaire 17 et secondaire 19. Tel qu'illustré sur les figures 2 à 5, l'extrémité supérieure 103 du joint d'étanchéité inter-portes 100 présente une forme d'écope dont au moins une dimension est supérieure à la dimension correspondante du reste du joint d'étanchéité inter-portes. Plus particulièrement, dans l'exemple illustré, l'écope 103 présente une dimension longitudinale et une dimension transversale qui sont supérieures aux dimensions correspondantes du joint d'étanchéité inter-portes et notamment du conduit interne 102 d'évacuation de fluide. Il résulte de la dimension transversale plus importante de l'écope 103, selon une direction perpendiculaire au plan principal dans lequel s'allonge l'ouvrant porteur du joint d'étanchéité inter-portes, que l'écope est positionnée dans un dégagement formé dans la structure du côté de caisse, et plus particulièrement ici dans le dégagement 901 précédemment évoqué, tel que cela est visible sur la figure 3.

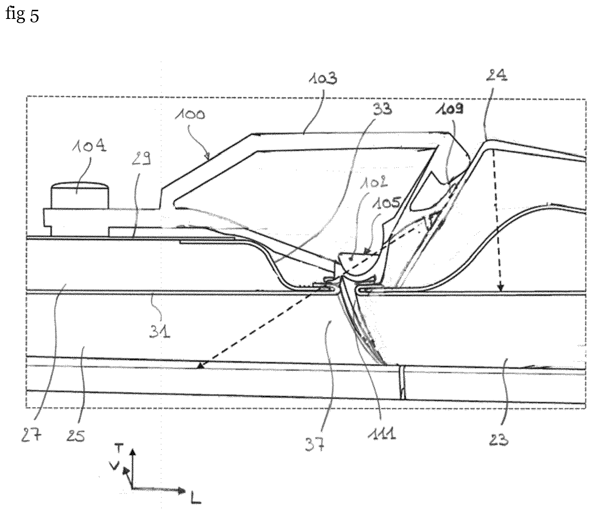

Tel qu'illustré sur la figure 5, une paroi de fond de l'écope 103 est agencée de sorte que l'orifice 105 à l'extrémité libre du conduit interne d'évacuation de fluide débouche dans cette paroi de fond. Cette communication fluidique permet de diriger le fluide récupéré dans l'écope vers la portion d'évacuation de fluide et notamment vers le conduit interne 102.

L'écope 103 présente une section de passage de fluide diminuant dans une direction orientée de la deuxième zone de réception 19 à la première zone de réception 17. La section de passage de fluide est vue en projection sur un plan perpendiculaire à la direction orientée de la deuxième zone de réception19 à la première zone de réception 17, et plus particulièrement sur un plan perpendiculaire à la direction verticale V selon laquelle s'étant principalement le joint d'étanchéité inter-portes 100.

L'évolution de la section de passage peut notamment être évolutive, c'est à dire décroitre progressivement au fur et à mesure qu'elle se rapproche du conduit interne 102 d'évacuation de fluide. Autrement dit, l'écope 103 présente une forme d'entonnoir permettant d'optimiser la quantité de fluide capté entre les joints d'étanchéité primaire et secondaire 17, 19 pour l'évacuer par ailleurs.

Afin de rigidifier l'écope et de s'assurer de sa tenue mécanique lorsque du fluide est récupéré, des nervures 1037 sont agencés entre une base du joint d'étanchéité inter-portes 100, notamment destinée à s'étendre contre la face intérieure de l'ouvrant 25 et à couvrir le jeu entre les deux ouvrants pour des questions d'esthétique côté habitacle, et un flan 1039 de l'écope 103 disposé à l'opposé de l'ouvrant. Ces nervures, ici au nombre de 3, permettent d'éviter l'affaissement de ce flan disposé à l'opposé de l'ouvrant et elles permettent ainsi de s'assurer que l'écope reste en position et notamment qu'elle reste au contact de la face intérieure de l'ouvrant et de la face d'extrémité de l'ouvrant additionnel.

Tel que cela est notamment visible sur les figures 2 et 4, la portion de récupération de fluide du joint d'étanchéité inter-portes 100 comporte l'écope 103 et au moins un organe de fixation 104, qui a notamment pour fonction d'assurer le maintien de l'écope 103 contre la face intérieure 29 de l'ouvrant 25 pour éviter qu'une quantité de fluide puisse couler entre l'écope 103 et cette face intérieure 29. L'organe de fixation 104 permet également d'assurer le maintien de l'écope 103 contre la face d'extrémité de l'ouvrant additionnel, ici la face d'extrémité arrière du premier ouvrant 23 formant porte avant. Outre une fonction de plaquage de l'écope 103 contre le deuxième ouvrant 25, l'organe de fixation 104 permet d'assurer que l'écope 103 reste entre la première zone de réception 291 et la deuxième zone de réception 293 en dépit de la contrainte exercée sur l'écope 103 par le contact du deuxième ouvrant 25 sur le côté de caisse 3 et le cas échéant par le contact avec le premier ouvrant 23, notamment au niveau de la face arrière 24 premier ouvrant 23, lorsque les deux ouvrants 23, 25 sont en position fermée.

Tel que cela a été évoqué précédemment et sera décrit plus en détails ci-après, le joint d'étanchéité inter-portes est fixé sur l'ouvrant, ici le deuxième ouvrant 25, au niveau d'une première zone de jonction disposée à une extrémité longitudinale de l'ouvrant. Il est notable sur les figures 2 et 4 que l'organe de fixation 104 est disposé à l'opposé de cette fixation sur la première zone de jonction par rapport à l'écope 103, de manière à assurer la tenue de l'écope contre l'ouvrant.

L'organe de fixation peut consister en un plot creux emmanché sur une partie saillante de la face intérieure de l'ouvrant, ou bien consister en un fût disposé en regard d'un alésage réalisé dans l'ouvrant pour permettre une fixation par rivetage ou vissage, ce fût étant ensuite recouvert d'un capuchon.

Tel qu'évoqué, le joint d'étanchéité inter-portes 100 est fixé sur l'ouvrant de telle sorte que l'écope soit au contact d'une part de la face intérieure 29 de l'ouvrant 25 et d'autre part de la face d'extrémité de l'ouvrant additionnel. A cet effet, et tel que cela est notamment visible sur la figure 2, l'écope 103 présente notamment un premier bord longitudinal 1031, qui s'étend contre la face intérieure 29 de l'ouvrant 25, et un premier bord transversal 1033, sensiblement perpendiculaire au premier bord longitudinal 1031, qui s'étend contre la face d'extrémité 24 de l'ouvrant additionnel, ici le premier ouvrant 23. Afin de s'assurer du contact de chacun de ces bords avec la face correspondante de l'ouvrant en regard, les flancs portant à leur extrémité ces bords de contact sont inclinés par rapport aux plans dans lesquels s'inscrivent les faces correspondantes, permettant ainsi de créer un contact linéaire entre l'écope et l'ouvrant ou l'ouvrant additionnel.

L'écope 1031 comprend par ailleurs une languette d'ajustement 1035 agencée entre le premier bord longitudinal 1031 et le premier bord transversal 1033 et qui a pour fonction de se déformer en fonction des contraintes exercées sur l'écope 103 en conservant l'agencement des bords qu'elle relie contre la face de la paroi de porte correspondante, à savoir l'agencement du premier bord longitudinal 1031 contre la face intérieure 29 de l'ouvrant 25 et du premier bord transversal 1033 contre la face d'extrémité 24 de l'ouvrant additionnel.

Sensiblement parallèlement à la portion d'évacuation qui vient d'être évoquée et qui comporte le conduit interne 102, le joint d'étanchéité inter-portes 100 comporte une portion de fixation qui est rendue solidaire de la première zone de jonction 35. En d'autres termes, le joint d'étanchéité inter-portes 100 comprend une première portion 109 formant cette portion de fixation et une deuxième portion 111 formant cette portion d'évacuation, ces deux portions s'étendant verticalement sous la portion de récupération, et étant localement reliée par une portion de raccordement 113.

Le première portion 109 du joint d'étanchéité inter-portes s'étend, selon la direction verticale V, entièrement le long de la première zone de jonction 35 qui est en regard de l'habitacle 4 du véhicule 1. La première portion 109 est configurée pour former une butée qui vient en contact avec au moins une partie du premier ouvrant 23, et plus particulièrement la face d'extrémité 24 de ce premier ouvrant 23.

La première partie 109 comprend au moins un élément de retenue 107, plus particulièrement visible sur la figure 7, à la première zone de jonction 35 qui s'étend entre la face intérieure 29 du deuxième ouvrant 25 et la face d'extrémité 33 du deuxième ouvrant 25. La première portion 109 du joint d'étanchéité inter-portes 100 est ainsi fixée le long d'un bord de la face intérieure 29 du deuxième ouvrant 25 en regard du premier ouvrant 23 lorsque les ouvrants 23, 25 ont été placés dans la position fermée.

Tel qu'illustré sur la figure 7, l'élément de retenue 107 est une mâchoire comportant deux bras 106 délimitant une zone de réception 108. La première zone de jonction 35 est emmanchée à force dans la zone de réception 108 et des griffes 110 font saillie des bras 106 dans la zone de réception 108 de manière à empêcher un retrait intempestif de la première portion 109 du joint d'étanchéité inter-portes 100.

La deuxième portion 111 du joint d'étanchéité inter-portes 100 porte le conduit interne 102 d'évacuation de fluide qui est disposée en regard de la face d'extrémité 33 du deuxième ouvrant 25. La deuxième portion 111 du joint d'étanchéité inter-portes 100 s'étend le long de la deuxième zone de jonction 37 entre la face extérieure 31 du deuxième ouvrant 25 et la face d'extrémité 33 du deuxième ouvrant 25. Dans cette configuration, le joint d'étanchéité inter-portes 100 assure l'étanchéité par rapport à l'extérieur du véhicule 1 en évitant que de l'eau et/ou des salissures ne puissent pénétrer dans l'habitacle 4 entre les deux ouvrants 23, 25.

Il convient de noter, notamment en se référant aux figures 6 et 7, que la deuxième portion 111 est décalée longitudinalement par rapport à la première portion 109 du joint d'étanchéité inter-portes 100, en prenant une position de retrait vers la face d'extrémité 33. En d'autres termes, la deuxième portion 111 du joint d'étanchéité inter-portes est disposée dans le renfoncement 39 agencé entre les deux zones de jonction 35, 37 au niveau de la face d'extrémité 33 du deuxième ouvrant 25. Ainsi, la deuxième portion 111 et le conduit interne 102 d'évacuation de fluide disposé en son sein sont protégés dans le volume du deuxième ouvrant. Le risque de déformation du conduit interne 102 d'évacuation de fluide, le risque de mauvaise évacuation de fluide par compression du conduit interne ou encore le risque de fuite de fluide par perforation du joint au niveau de la deuxième portion sont ainsi très limités notamment lors de la fermeture ou de l'ouverture du premier ouvrant 23 lorsque le deuxième ouvrant 25 est en position fermée ou lors de la fermeture ou de l'ouverture du deuxième ouvrant 25 alors que le premier ouvrant 23 est en position fermée.

La portion de raccordement 113, notamment visible sur la figure 6, peut ne s'étendre verticalement que sur une portion d'allongement vertical de la première portion 109 et de la deuxième portion 111. La présence de cette portion de raccordement 113 dans le joint d'étanchéité inter-portes 100 permet de s'assurer de la tenue des première et deuxième portions 109, 111 du joint d'étanchéité inter-portes 100 l'une par rapport à l'autre. Par ailleurs, cette portion de raccordement peut être équipé d'au moins un dispositif de fixation 115 configuré pour permettre le placage de la portion de raccordement 113 contre la face d'extrémité 33 du deuxième ouvrant, et donc le placage des première et deuxième portions 109, 111 du joint d'étanchéité inter-portes 100 contre le deuxième ouvrant sur toute la dimension verticale du joint d'étanchéité inter-portes 100. Le cas échéant, le joint d'étanchéité inter-portes 100 peut comporter plusieurs dispositifs de fixation permettant de fixer la portion de raccordement 113 à plusieurs hauteurs distinctes de la face d'extrémité 33. Dans le mode de réalisation représenté sur la figure 6, le dispositif de fixation 115 est un plot muni d'un filet interne disposé en regard d'un alésage taraudé 116 réalisé dans la face d'extrémité 33.

La première portion 109, la deuxième portion 111 et la portion de raccordement 113 forment un ensemble monobloc avec l'écope 103. Ainsi, la première portion 109 ou la portion de raccordement 113 du joint d'étanchéité inter-portes 100 ne peuvent être dissociées de la deuxième portion 111 et/ou de l'écope 113 sans que l'ensemble monobloc soit détérioré et rendu inutilisable.

La première portion 109, la deuxième portion 111, la portion de raccordement 113 et l'écope 103 peuvent être constituées des mêmes matériaux ou de matériaux différents.

Le procédé de fabrication du joint d'étanchéité inter-portes 100 peut inclure une étape de moulage ou d'extrusion de la première portion, de la deuxième portion et de la portion de raccordement suivie d'une étape de surmoulage de l'écope 103.

L'étape de moulage ou d'extrusion permet d'obtenir que la première portion 109 et la deuxième portion 111 soient venues de matière avec la portion de raccordement 113. Elles sont donc faites d'un même matériau. L'étape de surmoulage permet d'utiliser un matériau différent pour l'écope 103, par exemple un matériau plus résistant aux chocs et/ou hydrophobes.

Bien sûr, l'invention n'est pas limitée aux exemples qui viennent d'être décrits et de nombreux aménagements peuvent être apportés à ces exemples sans sortir du cadre de l'invention telle que définie par les revendications annexées.

Par exemple, le véhicule peut être équipé de deux côtés de caisse similaires avec des ouvrants et des dispositifs d'étanchéités associés, tels qu'ils ont été décrits ci-avant, identiques, ou bien le véhicule peut être équipé de deux côtés de caisse différents, le côté conducteur, ici non visible pouvant par exemple être équipé d'un pied milieu.

L'invention, telle qu'elle vient d'être décrite, atteint bien le but qu'elle s'était fixée à savoir d'assurer une étanchéité entre les portes latérales d'un véhicule dont la structure de caisse est dépourvue d'au moins un montant central. Par ailleurs, l'invention présente l'avantage d'être économique, l'avantage d'être facile à mettre en oeuvre et l'avantage d'être adaptable à tout système à double portes, notamment pour un bus, un train, un avion ou tout autre moyen de transport, voire à une double porte d'un bâtiment nécessitant une étanchéité spécifique.

## Revendications

1. Ouvrant (25) de véhicule (1) comprenant une paroi (27) destinée à venir en contact d'un côté de caisse du véhicule (1), la paroi (27) s'étendant dans un plan général d'extension vertical et longitudinal, la paroi (27) comportant une face intérieure (29) et une face extérieure (31) reliée à la face intérieure (29) par une face d'extrémité (33), l'ouvrant (25) comprenant, sur une partie supérieure de la face intérieure (29), une première zone de réception (291) d'un joint d'étanchéité primaire (17) qui est agencé au moins en partie sur le pourtour d'une ouverture du côté de caisse destinée à être fermée par l'ouvrant (25) et une deuxième zone de réception (293) d'un joint d'étanchéité secondaire (19) qui est agencé au moins en partie sur un brancard de pavillon (9) du côté de caisse, la première zone de réception (291) et la deuxième zone de réception (293) s'étendant sensiblement dans une direction longitudinale (L) et à distance l'une de l'autre, l'ouvrant (25) comprenant un joint d'étanchéité inter-portes (100) qui s'étend principalement le long d'une direction verticale (V), le joint d'étanchéité inter-portes (100) étant agencé au moins en partie sur une zone de jonction (35) entre la face intérieure (29) de la paroi (27) et la face d'extrémité (33) de la paroi (27), l'ouvrant étant **caractérisé en ce que** le joint d'étanchéité inter-portes (100) comprend une portion tubulaire (101) délimitant en son sein un conduit interne (102) d'évacuation de fluide et **en ce qu'**une extrémité supérieure (103) du joint d'étanchéité inter-portes (100) est agencée entre la première zone de réception (291) et la deuxième zone de réception (293), l'extrémité supérieure (103) délimitant un orifice (105) débouchant sur le conduit interne (102), l'extrémité supérieure (103) du joint d'étanchéité inter-portes (100) présentant une forme d'écope, et **en ce que** le joint d'étanchéité inter-portes (100) comprend un élément de retenue (107) à la zone de jonction (35) entre la face intérieure (29) de la paroi (27) et la face d'extrémité (33) de la paroi (27), le joint d'étanchéité inter-portes (100) comprenant une première portion (109) qui s'étend selon la direction verticale (V) et porte l'élément de retenue (107), la première portion (109) formant une butée configurée pour être en contact avec un ouvrant additionnel, et une deuxième portion (111) qui s'étend selon la direction verticale (V) et porte la portion tubulaire (101) du joint d'étanchéité inter-portes (100), la deuxième portion (111) s'étendant au moins en partie en regard de la face d'extrémité (33).

2. Ouvrant (25) selon la revendication précédente, dans lequel le joint d'étanchéité inter-portes (100) s'étend en travers de la direction longitudinale de la première zone de réception (291) et dans lequel l'écope (103) présente une section de passage de fluide diminuant dans une direction orientée de la deuxième zone de réception (293) à la première zone de réception (291).

3. Ouvrant (25) selon la revendication 1 ou 2, dans lequel le joint d'étanchéité inter-portes (100) comprend au moins un organe de fixation (104) à la face intérieure (29) de la paroi (27) de l'ouvrant (25), l'organe de fixation (104) étant agencé entre la première zone de réception (291) et la deuxième zone de réception (293).

4. Ouvrant (25) selon l'une quelconque des revendications 1 à 3 dans lequel le joint d'étanchéité inter-portes (100) comprend une portion de raccordement (113) de la première portion (109) du joint d'étanchéité inter-portes (100) à la deuxième portion (111) du joint d'étanchéité inter-portes (100), et dans lequel la première portion (109), la deuxième portion (111) et la portion de raccordement (113) forment un ensemble monobloc avec l'écope (103).

5. Ouvrant (25) selon la revendication précédente, dans lequel le joint d'étanchéité inter-portes (100) comprend un dispositif de fixation (115) de la portion de raccordement (113) à la face d'extrémité (33).

6. Véhicule (1) comprenant
- une caisse (3) délimitant un habitacle (4),
- la caisse (3) comprenant au moins un montant avant (5) et au moins un montant arrière (7), une extrémité supérieure du montant avant étant reliée à une extrémité supérieure du montant arrière par un brancard de pavillon (9), le montant avant (5), le montant arrière (7) et le brancard de pavillon (9) participant à délimiter avec un bas de caisse du véhicule (11) une ouverture (13) unique sur un côté latéral (15) de la caisse (3),
- un joint d'étanchéité primaire (17) agencé au moins en partie sur le pourtour de l'ouverture (13) unique du côté de caisse destinée à être fermée par l'ouvrant (25),
- un joint d'étanchéité secondaire (19) agencé au moins en partie sur un brancard de pavillon (9) du côté de caisse,
- au moins un ouvrant (25) selon l'une des revendications précédentes configuré pour être mobile entre une position fermée et une position ouverte de sorte à autoriser ou interdire l'accès à au moins une partie de l'ouverture unique (13), dans lequel l'ouvrant (25) est configuré pour que, dans une position fermée, la première zone de réception (291) de l'ouvrant (25) soit en contact avec le joint d'étanchéité primaire (17), la deuxième zone de réception (293) de l'ouvrant (25) soit en contact avec le joint d'étanchéité secondaire (19) et l'extrémité supérieure (103) du premier joint d'étanchéité inter-portes soit disposée entre le joint d'étanchéité primaire et le joint d'étanchéité secondaire.

7. Véhicule (1) selon la revendication précédente, dans lequel l'ouvrant (25) est une porte arrière, le véhicule comprenant en outre un ouvrant additionnel formant porte avant (23) configuré pour être mobile entre une position fermée et une position ouverte de sorte à autoriser ou interdire l'accès à au moins une autre partie de l'ouverture (13) unique, et dans lequel la porte avant (23) est configurée pour, dans la position fermée, être en contact avec au moins une partie de la première portion (109) du joint d'étanchéité inter-portes (100) et/ou être en contact avec au moins une partie de la deuxième portion (111) du joint d'étanchéité inter-portes (100).

## Patentansprüche

1. Öffnungselement (25) eines Fahrzeugs (1), welches eine Wand (27) umfasst, die dazu bestimmt ist, mit einer Karosserieseite des Fahrzeugs (1) in Kontakt zu kommen, wobei sich die Wand (27) in einer sich vertikal und in Längsrichtung erstreckenden allgemeinen Ebene erstreckt, wobei die Wand (27) eine Innenseite (29) und eine Außenseite (31), die mit der Innenseite (29) durch eine Endseite (33) verbunden ist, aufweist, wobei das Öffnungselement (25) auf einem oberen Teil der Innenseite (29) einen ersten Aufnahmebereich (291) einer primären Dichtung (17) umfasst, die wenigstens teilweise am Umfang einer Öffnung der Karosserieseite angeordnet ist, die dazu bestimmt ist, von dem Öffnungselement (25) verschlossen zu werden, und einen zweiten Aufnahmebereich (293) einer sekundären Dichtung (19), die wenigstens teilweise an einem Dachlängsträger (9) der Karosserieseite angeordnet ist, wobei sich der erste Aufnahmebereich (291) und der zweite Aufnahmebereich (293) im Wesentlichen in einer Längsrichtung (L) und in einem Abstand voneinander erstrecken, wobei das Öffnungselement (25) eine Dichtung zwischen den Türen (100) umfasst, die sich hauptsächlich entlang einer vertikalen Richtung (V) erstreckt, wobei die Dichtung zwischen den Türen (100) wenigstens teilweise an einem Verbindungsbereich (35) zwischen der Innenseite (29) der Wand (27) und der Endseite (33) der Wand (27) angeordnet ist, wobei das Öffnungselement **dadurch gekennzeichnet ist, dass** die Dichtung zwischen den Türen (100) einen rohrförmigen Abschnitt (101) umfasst, der in seinem Inneren einen inneren Fluidabflusskanal (102) begrenzt, und dadurch, dass ein oberes Ende (103) der Dichtung zwischen den Türen (100) zwischen dem ersten Aufnahmebereich (291) und dem zweiten Aufnahmebereich (293) angeordnet ist, wobei das obere Ende (103) einen Durchlass (105) begrenzt, der am inneren Kanal (102) mündet, wobei das obere Ende (103) der Dichtung zwischen den Türen (100) eine Schaufelform aufweist, und dadurch, dass die Dichtung zwischen den Türen (100) ein Element zum Halten (107) an dem Verbindungsbereich (35) zwischen der Innenseite (29) der Wand (27) und der Endseite (33) der Wand (27) umfasst, wobei die Dichtung zwischen den Türen (100) einen ersten Abschnitt (109) umfasst, der sich in der vertikalen Richtung (V) erstreckt und das Halteelement (107) trägt, wobei der erste Abschnitt (109) einen Anschlag bildet, der dafür ausgelegt ist, mit einem zusätzlichen Öffnungselement in Kontakt zu stehen, und einen zweiten Abschnitt (111), der sich in der vertikalen Richtung (V) erstreckt und den rohrförmigen Abschnitt (101) der Dichtung zwischen den Türen (100) trägt, wobei sich der zweite Abschnitt (111) wenigstens teilweise gegenüber der Endseite (33) erstreckt.

2. Öffnungselement (25) nach dem vorhergehenden Anspruch, wobei sich die Dichtung zwischen den Türen (100) quer zur Längsrichtung des ersten Aufnahmebereichs (291) erstreckt und wobei die Schaufel (103) eine Fluiddurchlassquerschnitt aufweist, der sich in einer Richtung vom zweiten Aufnahmebereich (293) zum ersten Aufnahmebereich (291) verkleinert.

3. Öffnungselement (25) nach Anspruch 1 oder 2, wobei die Dichtung zwischen den Türen (100) mindestens ein Organ zur Befestigung (104) an der Innenseite (29) der Wand (27) des Öffnungselements (25) umfasst, wobei das Befestigungsorgan (104) zwischen dem ersten Aufnahmebereich (291) und dem zweiten Aufnahmebereich (293) angeordnet ist.

4. Öffnungselement (25) nach einem der Ansprüche 1 bis 3, wobei die Dichtung zwischen den Türen (100) einen Abschnitt zum Anschluss (113) des ersten Abschnitts (109) der Dichtung zwischen den Türen (100) an den zweiten Abschnitt (111) der Dichtung zwischen den Türen (100) umfasst und wobei der erste Abschnitt (109), der zweite Abschnitt (111) und der Anschlussabschnitt (113) mit der Schaufel (103) eine einstückige Einheit bilden.

5. Öffnungselement (25) nach dem vorhergehenden Anspruch, wobei die Dichtung zwischen den Türen (100) eine Vorrichtung zur Befestigung (115) des Anschlussabschnitts (113) an der Endseite (33) umfasst.

6. Fahrzeug (1), welches umfasst:
- eine Karosserie (3), die einen Fahrzeuginnenraum (4) begrenzt,
- wobei die Karosserie (3) mindestens eine vordere Säule (5) und mindestens eine hintere Säule (7) umfasst, wobei ein oberes Ende der vorderen Säule mit einem oberen Ende der hinteren Säule durch einen Dachlängsträger (9) verbunden ist, wobei die vordere Säule (5), die hintere Säule (7) und der Dachlängsträger (9) dazu beitragen, mit einer Bodengruppe (11) des Fahrzeugs eine einzige Öffnung (13) auf einer lateralen Seite (15) der Karosserie (3) zu begrenzen,
- eine primäre Dichtung (17), die wenigstens teilweise am Umfang der einzigen Öffnung (13) der Karosserieseite angeordnet ist, die dazu bestimmt ist, durch das Öffnungselement (25) verschlossen zu werden,
- eine sekundäre Dichtung (19), die wenigstens teilweise an einem Dachlängsträger (9) der Karosserieseite angeordnet ist,
- mindestens ein Öffnungselement (25) nach einem der vorhergehenden Ansprüche, das dafür ausgelegt ist, zwischen einer geschlossenen Position und einer geöffneten Position beweglich zu sein, um so den Zugang zu wenigstens einem Teil der einzigen Öffnung (13) zu ermöglichen oder zu verhindern, wobei das Öffnungselement (25) so ausgebildet ist, dass in einer geschlossenen Position der erste Aufnahmebereich (291) des Öffnungselements (25) mit der primären Dichtung (17) in Kontakt steht, der zweite Aufnahmebereich (293) des Öffnungselements (25) mit der sekundären Dichtung (19) in Kontakt steht und das obere Ende (103) der ersten Dichtung zwischen den Türen zwischen der primären Dichtung und der sekundären Dichtung angeordnet ist.

7. Fahrzeug (1) nach dem vorhergehenden Anspruch, wobei das Öffnungselement (25) eine hintere Tür ist, wobei das Fahrzeug außerdem ein zusätzliches Öffnungselement umfasst, das eine vordere Tür (23) bildet und dafür ausgelegt ist, zwischen einer geschlossenen Position und einer geöffneten Position beweglich zu sein, um so den Zugang zu wenigstens einem anderen Teil der einzigen Öffnung (13) zu ermöglichen oder zu verhindern, und wobei die vordere Tür (23) so ausgebildet ist, dass sie in der geschlossenen Position mit wenigstens einem Teil des ersten Abschnitts (109) der Dichtung zwischen den Türen (100) in Kontakt steht und/oder mit wenigstens einem Teil des zweiten Abschnitts (111) der Dichtung zwischen den Türen (100) in Kontakt steht.

## Claims

1. Door (25) of a vehicle (1) comprising a wall (27) intended to come into contact with a body side of the vehicle (1), the wall (27) extending in a generally vertical and longitudinal plane of extension, the wall (27) having an inner face (29) and an outer face (31) that is connected to the inner face (29) by an end face (33), the door (25) comprising, on an upper portion of the inner face (29), a first receiving zone (291) for a primary seal (17) that is arranged at least partially on the perimeter of an opening of the body side intended to be closed by the door (25) and a second receiving zone (293) for a secondary seal (19) that is arranged at least partially on a side roof rail (9) of the body side, the first receiving zone (291) and the second receiving zone (293) extending substantially in a longitudinal direction (L) and at a distance from one another, the door (25) comprising an inter-door seal (100) that extends primarily in a vertical direction (V), the inter-door seal (100) being arranged at least partially on a joining zone (35) between the inner face (29) of the wall (27) and the end face (33) of the door (27), the door being **characterized in that** the inter-door seal (100) comprises a tubular portion (101) delimiting therein an internal fluid discharge duct (102), and **in that** an upper end (103) of the inter-door seal (100) is arranged between the first receiving zone (291) and the second receiving zone (293), the upper end (103) delimiting an orifice (105) opening into the internal duct (102), the upper end (103) of the inter-door seal (100) being scoop-shaped, and **in that** the inter-door seal (100) comprises a retaining element (107) for the joining zone (35) between the inner face (29) of the wall (27) and the end face (33) of the wall (27), the inter-door seal (100) comprising a first portion (109) that extends in the vertical direction (V) and bears the retaining element (107), the first portion (109) forming a stop designed to be in contact with an additional door, and a second portion (111) that extends in the vertical direction (V) and bears the tubular portion (101) of the inter-door seal (100), the second portion (111) extending at least partially in front of the end face (33).

2. Door (25) according to the preceding claim, wherein the inter-door seal (100) extends across the longitudinal direction of the first receiving zone (291), and wherein the scoop (103) has a fluid passage section that narrows in a direction oriented from the second receiving zone (293) to the first receiving zone (291).

3. Door (25) according to Claim 1 or 2, wherein the inter-door seal (100) comprises at least one fastening member (104) on the inner face (29) of the wall (27) of the door (25), the fastening member (104) being arranged between the first receiving zone (291) and the second receiving zone (293).

4. Door (25) according to any one of Claims 1 to 3, wherein the inter-door seal (100) comprises a connection portion (113) for connecting the first portion (109) of the inter-door seal (100) to the second portion (111) of the inter-door seal (100), and wherein the first portion (109), the second portion (111) and the connection portion (113) form a one-piece assembly with the scoop (103) .

5. Door (25) according to the preceding claim, wherein the inter-door seal (100) comprises a fastening device (115) for fastening the connection portion (113) to the end face (33).

6. Vehicle (1) comprising
- a body (3) delimiting a passenger compartment (4),
- the body (3) comprising at least one front pillar (5) and at least one rear pillar (7), an upper end of the front pillar being connected to an upper end of the rear pillar by a side roof rail (9), the front pillar (5), the rear pillar (7) and the side roof rail (9) participating in delimiting with a rocker panel of the vehicle (11) a single opening (13) on a lateral side (15) of the body (3) ,
- a primary seal (17) arranged at least partially on the perimeter of the single opening (13) of the body side intended to be closed by the door (25),
- a secondary seal (19) arranged at least partially on a side roof rail (9) of the body side,
- at least one door (25) according to one of the preceding claims, designed to be movable between a closed position and an open position so as to enable or prevent access to at least one part of the single opening (13), wherein the door (25) is designed so that, in a closed position, the first receiving zone (291) of the door (25) is in contact with the primary seal (17), the second receiving zone (293) of the door (25) is in contact with the secondary seal (19), and the upper end (103) of the first inter-door seal is arranged between the primary seal and the secondary seal.

7. Vehicle (1) according to the preceding claim, wherein the door (25) is a rear door, the vehicle further comprising an additional door forming a front door (23) designed to be movable between a closed position and an open position so as to enable or prevent access to at least one other part of the single opening (13), and wherein the front door (23) is designed, in the closed position, to be in contact with at least one part of the first portion (109) of the inter-door seal (100) and/or to be in contact with at least one part of the second portion (111) of the inter-door seal (100).
